# FASCICULE DE BREVET EUROPEEN

(11) **EP 1 055 582 B1**
(45) Date de publication et mention de la délivrance du brevet: **16.07.2003**
(21) Numéro de dépôt: 00401193.8
(22) Date de dépôt: 28.04.2000
(51) Int. Cl.: B62D 1/06, G05G 1/06

(54) **Elément tel qu'un volant de véhicule automobile et son procédé de préparation**
Element wie ein Kraftfahrzeuglenkrad und sein Herstellungsverfahren
Element such as a motor vehicle steering wheel and its process of fabrication

(30) Priorité: 03.05.1999 FR 9905606
(43) Date de publication de la demande: 29.11.2000
(73) Titulaire: Autoliv-Isodelta, 86190 Chire-en-Montreuil (FR)
(72) Inventeur: Geron, Jean, 86190 Chire en Montreuil (FR)
(74) Mandataire: Santarelli

(56) Documents cités:
- DE-A- 2 817 284
- DE-A- 3 741 538
- US-A- 4 824 873

## Description

L'invention a trait d'une façon générale aux véhicules automobiles, et plus particulièrement aux éléments destinés à être tenus en main par les occupants du véhicule, notamment le volant de direction ou le pommeau du levier de changement de vitesses.

On sait générallement que ces éléments présentent dans certains véhicules, en général haut de gamme, un revêtement de gainage comportant un substrat en cuir et une garniture externe qui recouvre ce substrat.

Un substrat en cuir recouvert par une garniture, comportant un film de polyuréthane et une couche de peinture, est connu du document DE 3741538 A, voir l'example 5.

L'invention vise à améliorer les conditions d'obtention et de maintien des caractéristiques d'aspect et de toucher propres à ce type particulier de revêtement de gainage.

Elle propose à cet effet un élément destiné à être pris en main par un occupant d'un véhicule automobile, présentant un revêtement de gainage comportant un substrat en cuir et une garniture externe recouvrant ledit substrat; caractérisé en ce que ladite garniture externe comporte :
- un film moulé de polyuréthane élastique dont une première face est adhérée audit substrat en cuir et dont la seconde face présente un grain venu de moulage ; et
- une couche de peinture appliquée par pulvérisation sur ladite seconde face dudit film de polyuréthane élastique.

L'obtention du grain du revêtement de gainage au cours de l'opération de moulage du film de polyuréthane permet de bénéficier d'une très grande précision, notamment dans la profondeur du grain, de sorte qu'il est bien plus facile d'obtenir la conformation recherchée qu'avec les revêtements de gainage conventionnels dans lesquels le grain est post-formé par estampage d'une couche de polyuréthane déformable (non élastique) déposée par pulvérisation sur le substrat en cuir, l'estampage se faisant grâce à une matrice plate portant l'empreinte du grain.

En outre, du fait que dans l'invention le polyuréthane appliqué sur le substrat en cuir est un film et du fait que ce film est élastique, le revêtement de gainage selon l'invention est capable d'avoir davantage de nerf que les revêtements antérieurs, ce qui permet notamment d'obtenir la tension requise pour un maintien correct du revêtement sur le reste de l'élément, avec un taux d'allongement plus faible, par exemple de 5 % avec l'invention contre 10 à 15 % avec un revêtement conventionnel à substrat en cuir sur lequel est appliquée par pulvérisation une couche de polyuréthane déformable, ce qui est favorable aux caractéristiques d'aspect puisqu'avec l'invention le grain est moins dilaté.

Enfin, toujours du fait que le polyuréthane qui est appliqué sur le substrat en cuir est un film et du fait que ce film est élastique, l'invention offre la possibilité d'utiliser un substrat en cuir dont les performances mécaniques et notamment la résistance au déchirement peuvent être moins élevées qu'avec les revêtements conventionnels. En particulier, il est possible d'utiliser de la refente de cuir (c'est-à-dire une feuille de cuir découpée dans l'épaisseur d'une peau à proximité du côté interne de celle-ci), par exemple du type dit de première refente, alors qu'avec les revêtements conventionnels il est pratiquement indispensable d'utiliser de la fleur de cuir (c'est-à-dire une feuille de cuir découpée dans l'épaisseur d'une peau à proximité du côté externe), en général du type dit de pleine fleur ou fleur rectifiée.

On notera à cet égard que la refente de cuir offre, par rapport à la fleur de cuir, l'avantage d'avoir une structure fibreuse plus homogène et donc mieux adaptée à l'opération de gainage ; et également l'avantage de pouvoir plus facilement être tannée sans chrome.

Par ailleurs, le fait que la couche de finition qui recouvre le film de polyuréthane élastique soit une couche de peinture appliquée par pulvérisation, est bien plus avantageux que s'il s'agissait d'un film moulé, ledit moulage imposant que la surface du moule soit très lisse, ce qui se serait retrouvé dans la couche de finition, qui aurait donc eu un aspect lisse et brillant, et aurait donc présenté un toucher dur et une faible résistance au vieillissement, alors que l'application par pulvérisation de la peinture permet de donner au revêtement un toucher doux et une matité offrant d'excellentes performances en matière de résistance au vieillissement.

En outre, l'application par peinture est beaucoup plus flexible, et offre notamment l'avantage de permettre d'ajuster l'aspect très aisément, voire de donner un aspect différent à des parties distinctes d'un même revêtement.

Selon des caractéristiques préférées, ledit film de polyuréthane élastique est adhéré par lui-même audit substrat en cuir.

Il est possible de réaliser une telle adhésion en pressant fortement le film sur le substrat en cuir avant que sa polymérisation soit terminée.

Cela évite l'emploi d'une couche de colle, qui aurait augmenté l'épaisseur de la garniture recouvrant le substrat en cuir et aurait introduit une certaine hétérogénéité susceptible de nuire aux caractéristiques mécaniques, aux caractéristiques de perméabilité et à la résistance au vieillissement de la garniture exteme.

Selon d'autres caractéristiques préférées du film de polyuréthane, en raison de la qualité des résultats qu'elles procurent, ce film est en polyuréthane à l'eau et/ou ce film présente une épaisseur d'environ 0,04 millimètre.

Selon d'autres caractéristiques préférées, pour les mêmes raisons, la peinture appliquée par pulvérisation est en polyuréthane élastique et/ou présente une épaisseur d'environ 0,025 millimètre.

Selon d'autres caractéristiques préférées, toujours pour les mêmes raisons, ledit substrat est en refente de cuir foulonnée et/ou présente une épaisseur d'environ 1,2 à 1,4 millimètre.

L'invention vise également, sous un deuxième et un troisième aspect, respectivement un volant de direction de véhicule et un pommeau de levier de changement de vitesse, qui constituent un élément tel qu'exposé ci-dessus.

L'invention vise également, sous un quatrième aspect, un procédé de préparation d'un élément tel qu'exposé ci-dessus, caractérisé en ce qu'il comporte :
- une opération de foulonnage d'une feuille de refente de cuir ;
- une opération de préparation par moulage d'un film de polyuréthane élastique avec une face dudit film qui présente une surface grainée ;
- une opération d'adhésion dudit film sur ladite feuille par la face dudit film opposée à ladite face qui présente une surface grainée ;
- une opération d'application par pulvérisation d'une couche de peinture sur ladite face présentant une surface grainée dudit film ; et
- une opération de découpage et de couture de ladite feuille pour gainer ledit élément.

Selon des caractéristiques préférées, ladite opération de préparation par moulage d'un film comporte l'utilisation comme moule d'un papier siliconé et ladite opération d'adhésion dudit film est effectuée alors que ledit film n'est pas encore totalement polymérisé.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est une vue en plan d'un volant de direction conforme à l'invention ;
- la figure 2 en est la vue en coupe repérée par II-II sur la figure 1 ;
- la figure 3 montre en agrandissement le détail repéré par III sur la figure 2 ; et
- la figure 4 montre un levier de changement de vitesses muni d'un pommeau conforme à l'invention.

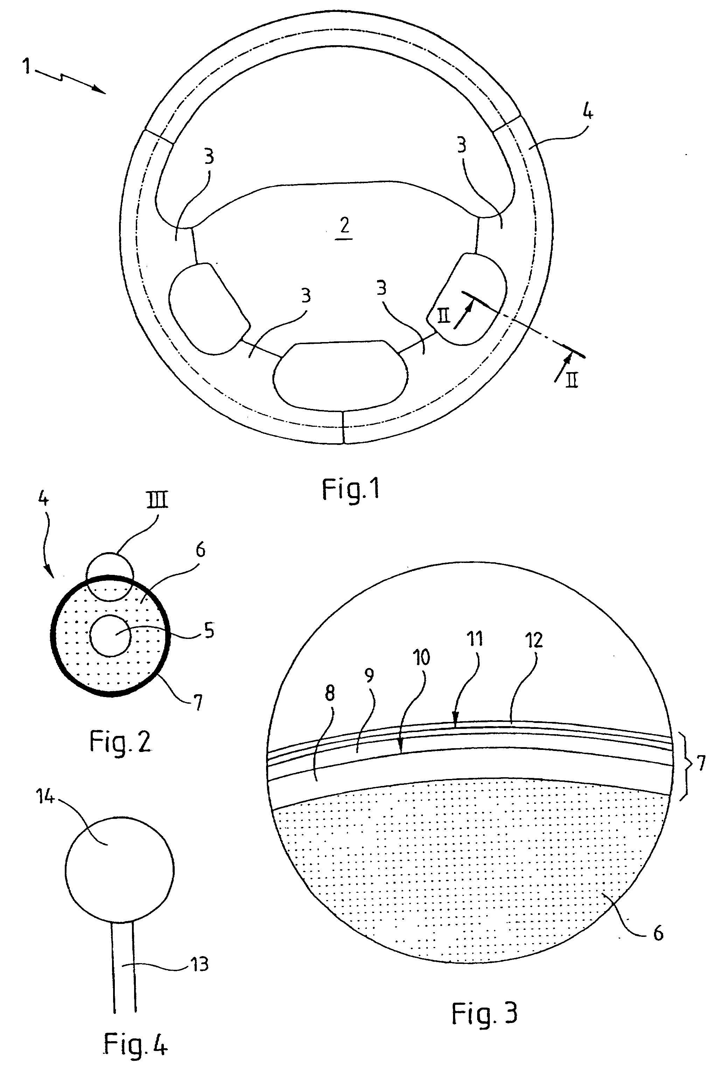

Le volant de direction 1 illustré sur la figure 1 comporte un moyeu central 2, quatre courtes branches 3 et une jante 4 gainée, de même qu'une partie des branches 3, par un revêtement 7 (figure 2) à substrat en cuir dont les bords sont réunis de la manière habituelle par une couture (non représentée) située du côté interne, le revêtement étant ici en trois morceaux, respectivement pour la partie supérieure de la jante 4 et pour ses moitiés ainsi que pour les branches situées sous cette partie respectivement à gauche et à droite.

Comme on le voit sur la figure 2, la jante 4 présente une armature métallique 5 entourée par un rembourrage 6 en mousse synthétique lui-même entouré par le revêtement 7 à substrat en cuir.

Ainsi qu'on le voit sur la figure 3, le revêtement de gainage 7 comporte un substrat en cuir 8 et une garniture externe recouvrant ce substrat, formée par un film 9 de polyuréthane élastique dont la face de 10 est adhérée au substrat 8 et dont la face opposée 11 présente un grain venu de moulage, la face 11 étant recouverte par une couche 12 de peinture appliquée par pulvérisation.

Dans l'exemple illustré, le substrat 8 est en croûte de cuir dit de première refente et présente une épaisseur de l'ordre de 1,2 à 1,4 millimètre, le film 9 est en polyuréthane à temps de polymérisation relativement rapide, de sorte qu'il est élastique (et non déformable), son épaisseur étant de l'ordre de 0,04 millimètre, la couche 12 de peinture étant également en polyuréthane à temps de polymérisation relativement rapide, son épaisseur étant de l'ordre de 0,025 millimètre.

Pour préparer le revêtement 7, on pratique sur une feuille de substrat en croûte de cuir 8 une opération de foulonnage afin que cette feuille présente la souplesse requise, on prépare le film 9 grâce à du papier siliconé sur une face et conformé avec le grain que l'on souhaite obtenir pour le revêtement 7, en déposant ce film à l'état liquide (non polymérisé) sur ce papier grâce à des rouleaux qui entraînent ce papier et grâce à une lame disposée parallèlement au papier et qui assure la constance de l'épaisseur du film déposé puis, avant que ce film soit complètement polymérisé, on applique fortement le papier recouvert du film sur le substrat 8 de sorte que le film 9 adhère directement par lui-même au substrat 8, ensuite on enlève le papier siliconé (qui présente la propriété de ne pas adhérer au polyuréthane), ce qui dégage la face 11 qui présente alors le grain obtenu par moulage sur la feuille de papier siliconé et, ensuite, on applique sur le film 9 la couche de peinture 12 afin d'obtenir les caractéristiques de toucher et d'aspect recherchées, c'est-à-dire un toucher doux et un aspect mat qu'il n'est pas possible d'obtenir directement par moulage (le papier siliconé est très lisse, de sorte que le toucher de la face 11 est rigide et son aspect brillant).

Si nécessaire, on réalise ensuite un nouveau foulonnage pour ajuster la souplesse.

Une fois la feuille de revêtement ainsi préparée, elle est découpée et cousue classiquement pour former le revêtement de gainage 7.

On notera que le film 9 est en polyuréthane à l'eau et non au solvant synthétique, compte tenu de la porosité du cuir.

Le levier de changement de vitesses 13 montré sur la figure 4 comporte de façon classique à son extrémité supérieure, destinée à être prise en main par le conducteur du véhicule, un pommeau 14 qui est gainé par le même revêtement 7 que le volant 1, les coutures de ce revêtement de gainage (non représentées) étant disposées aux endroits habituels.

Dans des variantes non représentées, ce sont d'autres éléments destinés à être pris en main par les occupants du véhicule qui sont gainés par le revêtement 7, par exemple le levier de frein à main, les boutons de commande d'ouverture de porte ou les poignées de virage.

## Revendications

1. Elément destiné à être pris en main par un occupant d'un véhicule automobile, présentant un revêtement de gainage comportant un substrat en cuir et une garniture externe recouvrant ledit substrat ; **caractérisé en ce que** ladite garniture externe (7) comporte :
- un film moulé (9) de polyuréthane élastique dont une première face (10) est adhérée audit substrat en cuir (8) et dont la seconde face (11) présente un grain venu de moulage ; et
- une couche (12) de peinture appliquée par pulvérisation sur ladite seconde face (11) dudit film (9) de polyuréthane élastique.

2. Elément selon la revendication 1 **caractérisé en ce que** ledit film (9) de polyuréthane élastique est adhéré par lui-même audit substrat en cuir (8).

3. Elément selon l'une quelconque des revendications 1 ou 2, **caractérisé en ce que** ledit film (9) de polyuréthane élastique est en polyuréthane à l'eau.

4. Elément selon l'une quelconque des revendications 1 à 3 **caractérisé en ce que** ledit film (9) de polyuréthane élastique présente une épaisseur d'environ 0,04 millimètre.

5. Elément selon l'une quelconque des revendications 1 à 4, **caractérisé en ce que** ladite peinture est en polyuréthane élastique.

6. Elément selon l'une quelconque des revendications 1 à 5, **caractérisé en ce que** ladite peinture présente une épaisseur d'environ 0,025 millimètre.

7. Elément selon l'une quelconque des revendications 1 à 6, **caractérisé en ce que** ledit substrat (8) est en refente de cuir foulonnée.

8. Elément selon l'une quelconque des revendications 1 à 7, **caractérisé en ce que** ledit substrat en cuir (8) présente une épaisseur d'environ 1,2 à 1,4 millimètre.

9. Volant (1) de direction de véhicule, **caractérisé en ce qu'**il constitue un élément selon l'une quelconque des revendications 1 à 8.

10. Pommeau (14) de levier (13) de changement de vitesses de véhicule **caractérisé en ce qu'**il constitue un élément selon l'une quelconque des revendications 1 à 8.

11. Procédé de préparation d'un élément selon l'une quelconque des revendications 1 à 8, **caractérisé en ce qu'**il comporte :
- une opération de foulonnage d'une feuille (8) de refente de cuir ;
- une opération de préparation par moulage d'un film (9) de polyuréthane élastique avec une face (11) dudit film qui présente une surface grainée ;
- une opération d'adhésion dudit film (9) sur ladite feuille (8) par la face (10) dudit film opposée à ladite face (11) qui présente une surface grainée ;
- une opération d'application par pulvérisation d'une couche (12) de peinture sur ladite face (11) présentant une surface grainée dudit film (9) ; et
- une opération de découpage et de couture de ladite feuille (7) pour gainer ledit élément.

12. Procédé selon la revendication 11 **caractérisé en ce que** ladite opération de préparation par moulage d'un film comporte l'utilisation comme moule d'un papier siliconé et **en ce que** ladite opération d'adhésion dudit film est effectuée alors que ledit film n'est pas encore totalement polymérisé.

## Patentansprüche

1. Element, das dazu bestimmt ist, von einem Insassen eines Kraftfahrzeuges in die Hand genommen zu werden, mit einer Ummantelung aus einem Trägermaterial aus Leder sowie einem das Trägermaterial bedeckenden Außenüberzug, **dadurch gekennzeichnet, dass** der Außenüberzug (7) umfaßt:
- einen ausgeformten Film (9) aus elastischem Polyurethan, von dem eine erste Fläche (10) an das Trägermaterial (8) aus Leder geklebt ist und von dem die zweite Fläche (11) eine durch das Ausformen erzeugte Narbung aufweist; und
- eine Farbschicht (12), welche durch Aufspritzen auf die zweite Fläche (12) des Films (9) aus elastischem Polyurethan aufgebracht worden ist.

2. Element nach Anspruch 1, **dadurch gekennzeichnet, dass** der Film (9) aus elastischem Polyurethan selbst an dem Trägermaterial (8) aus Leder verklebt ist.

3. Element nach einem der Ansprüche 1 oder 2, **dadurch gekennzeichnet, dass** der Film (9) aus elastischem Polyurethan ein Polyurethan auf Wasserbasis ist.

4. Element nach einem der Ansprüche 1 bis 3, **dadurch gekennzeichnet, dass** der Film (9) aus elastischem Polyurethan eine Dicke von etwa 0,04 mm hat.

5. Element nach einem der Ansprüche 1 bis 4, **dadurch gekennzeichnet, dass** die Farbschicht (12) ein elastisches Polyurethan ist.

6. Element nach einem der Ansprüche 1 bis 5, **dadurch gekennzeichnet, dass** die Farbschicht (12) eine Dicke von etwa 0,025 mm hat.

7. Element nach einem der Ansprüche 1 bis 6, **dadurch gekennzeichnet, dass** das Trägermaterial (8) ein gespaltenes, gewalktes Leder ist.

8. Element nach einem der Ansprüche 1 bis 7, **dadurch gekennzeichnet, dass** das Trägermaterial (8) aus Leder eine Dicke von etwa 1,2 bis 1,4 mm hat.

9. Lenkrad für ein Fahrzeug, **dadurch gekennzeichnet, dass** es ein Element nach einem der Ansprüche 1 bis 8 bildet.

10. Manschette (14) für einen Schalthebel (13) eines Fahrzeuges, **dadurch gekennzeichnet, dass** sie ein Element nach einem der Ansprüche 1 bis 8 bildet.

11. Verfahren für die Herstellung eines Elementes nach einem der Ansprüche 1 bis 8, **dadurch gekennzeichnet, dass** es umfaßt:
- ein Walken eines Bogens (8) aus gespaltenem Leder;
- ein Ausformen eines Filmes (9) aus elastischem Polyurethan mit einer eine genarbte Oberfläche aufweisenden Fläche (11) des Filmes;
- ein Aufkleben des Filmes (9) auf den Bogen (8) mit der Fläche (10) des Filmes (8), welche der die genarbte Oberfläche aufweisenden Fläche (11) entgegengesetzt ist;
- ein Aufspritzen eine Farbschicht (12) auf die die genarbte Oberfläche aufweisende Fläche (11) des Filmes (9); und
- ein Schneiden und Nähen des Bogens (7) zur Gewinnung des Elementes.

12. Verfahren nach Anspruch 11, **dadurch gekennzeichnet, dass** das Ausformen des Filmes die Verwendung eines silikonhaltigen Papiers als Form umfaßt, und dass das Aufkleben des Filmes durchgeführt wird, wenn der Film noch nicht vollständig polymerisiert ist.

## Claims

1. A member adapted to be grasped by an occupant of an automotive vehicle, having a wrap covering comprising a leather substrate and an outer dressing covering said substrate; **characterized in that** said outer dressing (7) comprises:
- a molded film (9) of elastic polyurethane of which a first face (10) is adhered to said leather substrate (8) and of which the second face (11) has a grain formed by molding; and
- a coat (12) of paint applied by spraying on said second face (11) of said elastic polyurethane film (9).

2. A member according to claim 1, **characterized in that** said elastic polyurethane film (9) is adhered by itself to said leather substrate (8).

3. A member according to any one of claims 1 or 2, **characterized in that** said elastic polyurethane film (9) is of water polyurethane.

4. A member according to any one of claims 1 or 3, **characterized in that** said elastic polyurethane film (9) has a thickness of approximately 0.04 millimeter.

5. A member according to any one of claims 1 to 4, **characterized in that** said paint is of elastic polyurethane.

6. A member according to any one of claims 1 or 5, **characterized in that** said paint has a thickness of approximately 0.025 millimeter.

7. A member according to any one of claims 1 to 6, **characterized in that** said substrate (8) is of milled inner split.

8. A member according to any one of claims 1 or 7, **characterized in that** said leather substrate (8) has a thickness of approximately 1.2 to 1.4 millimeter.

9. A vehicle steering wheel (1), **characterized in that** it constitutes a member according to any one of claims 1 to 8.

10. A knob (14) of a vehicle gear lever (13), **characterized in that** it constitutes a member according to any one of claims 1 to 8.

11. A method of preparing a member according to any one of claims 1 to 8, **characterized in that** it comprises:
- an operation of milling a sheet (8) of inner split;
- an operation of preparing an elastic polyurethane film (9) by molding, with one face (11) of said film which has a grainy surface;
- an operation of adhering said film (9) onto said sheet (8) by the face (10) of said film opposite said face (11) which has a grainy surface;
- an operation of spray application of a coat (12) of paint to said face (11) of said film (9) having a grainy surface; and
- an operation of cutting out and seam forming of said sheet (7) to wrap said member.

12. A method according to claim 11, **characterized in that** said operation of preparing a film by molding comprises the use as a mold of a silicone treated paper and **in that** said operation of adhering said film is carried out before the film is entirely polymerized.
